# EUROPEAN PATENT APPLICATION

(11) **EP 4 586 728 A1**
(43) Date of publication of application: **16.07.2025**
(21) Application number: 23870268.2
(22) Date of filing: 08.09.2023
(51) Int. Cl.: H04W 74/08

(54) **PARAMETER SELECTION METHOD AND APPARATUS FOR RANDOM ACCESS**

(30) Priority: 29.09.2022 CN 202211204375
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN)
(74) Representative: Körber, Martin Hans
(86) International application number: PCT/CN2023/117813
(87) International publication number: WO 2024/067029

(57) **Abstract**

A random access parameter selection method and an apparatus are provided, and relate to the field of communication technologies. The method includes: A non-access stratum of a terminal device sends network slice access stratum group NSAG information to an access stratum of the terminal device, where the NSAG information includes an NSAG identifier, or the NSAG information includes an NSAG identifier and an NSAG priority. The access stratum of the terminal device selects a random access parameter based on the NSAG information and a service feature priority. In a possible implementation, when a service that triggers random access and that is of the terminal device corresponds to a plurality of network slices and corresponds to different network slice access stratum groups NSAGs, how to select a random access parameter based on a plurality of NSAG identifiers may be determined based on the method, to improve random access efficiency of the terminal device.

## Description

This application claims priority to Chinese Patent Application No. 202211204375.0, filed with the China National Intellectual Property Administration on September 29, 2022 and entitled "RANDOM ACCESS PARAMETER SELECTION METHOD AND APPARATUS", which is incorporated herein by reference in its entirety.

### TECHNICAL FIELD

This application relates to the field of communication technologies, and in particular, to a random access parameter selection method and an apparatus.

### BACKGROUND

To meet differentiated requirements of various types of services, in a fifth generation (fifth generation, 5G) mobile communication network (5G network for short), an end-to-end network slice (Network Slice) is proposed to provide a customized network service for a user. The network slice means that a plurality of logical subnets having different features and isolated from each other are virtualized on a same physical infrastructure in the 5G network through flexible allocation of network resources and on-demand networking.

Further, based on different purposes, for example, based on cell reselection or random access, one or more network slices may be grouped and identified by using a network slice access stratum group (Network Slice AS Group, NSAG). For example, network slices associated with an NSAG #1 used for cell reselection include a slice #1 and a slice #2, and network slices associated with an NSAG #2 used for random access may include the slice #1 and a slice #3.

Currently, a network device may configure a dedicated random access channel (Random Access Channel, RACH) resource, RA resource for short, based on a network slice service to implement differentiated treatment for different slice services. Considering that there are a large quantity of types of network slices, resource division may be performed on an RACH of an air interface based on an NSAG. For example, there is a correspondence between an NSAG ID and an RA resource. Therefore, in a random access resource selection process of a terminal device, a medium access control (Medium Access Control, MAC) layer may determine, based on an NSAG ID provided by an upper layer of the terminal device, an RA resource for random access and a random access parameter.

However, currently, in addition to a slice feature, features (features) of a network service may further include a plurality of features such as small data transmission (small data transmission, SDT), coverage enhancement (coverage enhancement, CE), or a reduced capability (reduced capability, RedCap). Different features may correspond to different RA resources. In an implementation, the terminal device may determine a corresponding RA resource based on an NSAG ID and priorities of different features (namely, feature priorities), to implement random access. However, when a service that triggers random access and that is of the terminal device corresponds to a plurality of network slices, and the plurality of network slices correspond to different NSAG IDs, a behavior rule of how the terminal device determines an RA resource based on the plurality of NSAG IDs is not clear currently. Consequently, a conflict may occur between different terminal devices in random access resource selection, causing low random access efficiency and low random access channel resource utilization.

### SUMMARY

This application provides a random access parameter selection method and an apparatus, to improve random access efficiency.

According to a first aspect, a random access parameter selection method is provided. The method includes: A non-access stratum of a terminal device sends network slice access stratum group NSAG information to an access stratum of the terminal device, where the NSAG information includes an NSAG identifier, or the NSAG information includes an NSAG identifier and an NSAG priority. The access stratum of the terminal device selects a random access parameter based on the NSAG information and a service feature priority.

The foregoing implementation may be used to resolve a problem of how to select a random access parameter based on a plurality of NSAG identifiers when a service that triggers random access and that is of the terminal device corresponds to a plurality of network slices and corresponds to different network slice access stratum groups NSAGs. The non-access stratum of the terminal device may send the NSAG identifier or the NSAG identifier and the NSAG priority to the access stratum of the terminal device, so that the access stratum of the terminal device can select the random access parameter based on the NSAG information and the service feature priority. This standardizes a random access parameter selection manner for the terminal device, so that different terminal devices can select a group of random access parameters based on a same selection manner. The selection manner is flexible and configurable. Therefore, a probability of a resource conflict between different terminal devices during random access can be reduced, and random access efficiency can be improved.

In an implementation, the NSAG identifier is an identifier of an NSAG with a highest priority in NSAGs corresponding to a current service. The non-access stratum of the terminal device may send only an identifier of one NSAG to the access stratum of the terminal device, or send only an identifier of an NSAG with a highest NSAG priority in a plurality of NSAGs, so that the access stratum of the terminal device may select a corresponding random access parameter based on the NSAG.

In an implementation, the method further includes: The non-access stratum of the terminal device determines an NSAG identifier with a highest NSAG priority based on a network slice identifier corresponding to the current service and a correspondence between an NSAG identifier and a network slice identifier. The non-access stratum of the terminal device may determine, based on the network slice identifier corresponding to the current service and the correspondence that is between the NSAG and the network slice identifier and that is obtained from a core network, the NSAG identifier with the highest NSAG priority and that corresponds to the network slice identifier of the current service, to provide the NSAG identifier to the access stratum of the terminal device, so that the access stratum selects the random access parameter based on the NSAG identifier.

In an implementation, that the access stratum of the terminal device selects the random access parameter based on the NSAG information and the service feature priority includes one or more of the following manners: manner 1: determining a plurality of groups of random access parameters based on the NSAG identifier, and selecting one group of random access parameters associated with a largest quantity of NSAGs from the plurality of groups of random access parameters; manner 2: determining a plurality of groups of random access parameters based on the NSAG identifier, and selecting one group of random access parameters associated with a largest quantity of service features from the plurality of groups of random access parameters; or manner 3: determining a plurality of groups of random access parameters based on the NSAG identifier, and selecting one group of random access parameters from the plurality of groups of random access parameters in descending order of feature priorities.

In this implementation, if the access stratum of the terminal device may determine the corresponding plurality of groups of random access parameters based on the NSAG identifier, the access stratum of the terminal device may select one group of random access parameters from the plurality of groups of random access parameters based on one or more of a quantity of NSAGs associated with each group of random access parameters, a quantity of associated service features, and a feature priority. The selection manner is flexible and configurable. Therefore, a probability of a resource conflict between different terminal devices during random access selection can be reduced, and random access efficiency can be improved.

In an implementation, that the NSAG information includes an NSAG identifier and an NSAG priority includes: The NSAG information includes an NSAG identifier and an NSAG priority of the NSAG that correspond to a current service of the terminal device.

In this implementation, the non-access stratum of the terminal device may send, to the access stratum of the terminal device, one or more NSAG identifiers and corresponding NSAG priorities corresponding to the current service, so that the access stratum of the terminal device may flexibly select a corresponding random access parameter based on at least one NSAG. This improves flexibility of resource selection.

In an implementation, the NSAG information includes a network slice identifier corresponding to a current service of the terminal device, a correspondence between a network slice identifier and an NSAG identifier, and the NSAG priority of the NSAG.

In this implementation, the non-access stratum of the terminal device may send, to the access stratum of the terminal device, one or more network slice identifiers corresponding to the current service and the correspondence between the network slice identifier and the NSAG, so that the access stratum of the terminal device may determine, based on the foregoing information, at least one NSAG identifier and NSAG priority that correspond to the network slice identifier, and flexibly select a corresponding random access parameter based on at least one NSAG. This improves flexibility of resource selection.

In an implementation, that the access stratum of the terminal device selects the random access parameter based on the NSAG information and the service feature priority includes: The access stratum of the terminal device determines, based on the NSAG information, an NSAG identifier with a highest NSAG priority in NSAG identifiers corresponding to the current service, determines a plurality of groups of random access parameters based on the NSAG identifier with the highest priority, and selects one group of random access parameters from the plurality of groups of random access parameters. The access stratum of the terminal device may select the NSAG identifier with the highest NSAG priority from a plurality of NSAGs corresponding to the network slice identifier, and then select one group of random access parameters corresponding to an NSAG with the highest NSAG priority.

In an implementation, that the access stratum of the terminal device selects the random access parameter based on the NSAG information and the service feature priority includes: The access stratum of the terminal device obtains, based on the NSAG information, the NSAG identifier corresponding to the current service, determines a corresponding plurality of groups of random access parameters based on the NSAG identifier, and selects one group of random access parameters from the plurality of groups of random access parameters. The access stratum of the terminal device may determine a plurality of groups of random access parameters based on a plurality of NSAGs corresponding to the network slice identifier, and select one group of random access parameters from the plurality of groups of random access parameters for random access. The random access parameter selection manner is flexible, so that a resource conflict can be avoided, and resource utilization can be improved.

In an implementation, the selecting one group of random access parameters from the plurality of groups of random access parameters specifically includes one or more of the following manners: manner 1: selecting one group of random access parameters associated with a largest quantity of NSAGs from the plurality of groups of random access parameters; manner 2: selecting one group of random access parameters associated with a largest quantity of service features from the plurality of groups of random access parameters; manner 3: selecting one group of random access parameters from the plurality of groups of random access parameters in descending order of feature priorities; or manner 4: selecting one group of random access parameters from the plurality of groups of random access parameters in descending order of NSAG priorities.

In this implementation, if the access stratum of the terminal device determines the corresponding plurality of groups of random access parameters based on at least one NSAG identifier, the access stratum of the terminal device may select one group of random access parameters from the plurality of groups of random access parameters based on one or more of a quantity of NSAGs associated with each group of random access parameters, a quantity of associated service features, an NSAG priority, and a feature priority. The selection manner is flexible and configurable. Therefore, a probability of a resource conflict between different terminal devices during random access selection can be reduced, and random access efficiency can be improved.

In an implementation, selecting, by the access stratum of the terminal device, one group of random access parameters from the plurality of groups of random access parameters includes: The access stratum of the terminal device determines a first group of random access parameters, where the first group of random access parameters is determined from the plurality of groups of random access parameters in descending order of associated feature priorities. The access stratum of the terminal device may select the random access parameter in descending order of associated feature priorities in the plurality of groups of random access parameters, so that the selected random access parameter meets a service feature with a high priority as much as possible. This meets different service requirements, and improves random access efficiency.

In an implementation, if it is determined that the first group of random access parameters is not unique, selecting, by the access stratum of the terminal device, one group of random access parameters from the plurality of groups of random access parameters includes: selecting one group of random access parameters from a plurality of first groups of random access parameters in descending order of NSAG priorities.

In this implementation, if the random access parameter selected by the access stratum of the terminal device based on the associated feature priorities in descending order is not a unique group, further selection may continue based on the NSAG priority, so that the selected random access parameter meets a high service priority and a high NSAG priority as much as possible. This meets different service requirements, and improves random access efficiency.

In an implementation, the method further includes: receiving indication information from a network device, where the indication information indicates a manner of selecting the random access parameter by the terminal device, or indicates manners of selecting the random access parameter by the terminal device and priorities of the manners.

In this implementation, the network device may configure, for the terminal device by using the indication information, the manner of selecting the random access parameter by the access stratum, for example, indicate a combination of one or more of the foregoing manner 1, manner 2, manner 3, or manner 4. Optionally, a priority order of combinations of the manners may be further configured, so that the terminal device can flexibly select the random access parameter to meet different service requirements.

In an implementation, the random access parameter includes a random access resource. The method further includes: The terminal device initiates random access by using the resource.

According to a second aspect, a random access parameter selection method is provided. The method includes: A network device determines a random access parameter selection manner. The network device sends indication information to a terminal device, where the indication information indicates a manner of selecting a random access parameter by the terminal device, or indicates manners of selecting a random access parameter by the terminal device and priorities of the manners.

In an implementation, the indication information indicates one or more of the following manners: manner 1: selecting one group of random access parameters associated with a largest quantity of NSAGs from a plurality of groups of random access parameters; manner 2: selecting one group of random access parameters associated with a largest quantity of service features from a plurality of groups of random access parameters; manner 3: selecting one group of random access parameters from a plurality of groups of random access parameters in descending order of feature priorities; or manner 4: selecting one group of random access parameters from a plurality of groups of random access parameters in descending order of NSAG priorities.

According to a third aspect, a communication apparatus is provided. The apparatus includes: a non-access stratum entity, configured to send network slice access stratum group NSAG information to an access stratum entity, where the NSAG information includes an NSAG identifier, or the NSAG information includes an NSAG identifier and an NSAG priority; and the access stratum entity, configured to select a random access parameter based on the NSAG information and a service feature priority.

In an implementation, the NSAG identifier is an identifier of an NSAG with a highest priority in NSAGs corresponding to a current service.

In an implementation, the non-access stratum entity is further configured to determine an NSAG identifier with a highest NSAG priority based on a network slice identifier corresponding to the current service and a correspondence between an NSAG identifier and a network slice identifier.

In an implementation, that the access stratum entity selects the random access parameter based on the NSAG information and the service feature priority includes one or more of the following manners: manner 1: determining a plurality of groups of random access parameters based on the NSAG identifier, and selecting one group of random access parameters associated with a largest quantity of NSAGs from the plurality of groups of random access parameters; manner 2: determining a plurality of groups of random access parameters based on the NSAG identifier, and selecting one group of random access parameters associated with a largest quantity of service features from the plurality of groups of random access parameters; or manner 3: determining a plurality of groups of random access parameters based on the NSAG identifier, and selecting one group of random access parameters from the plurality of groups of random access parameters in descending order of feature priorities.

In an implementation, that the NSAG information includes an NSAG identifier and an NSAG priority includes: The NSAG information includes an NSAG identifier and an NSAG priority of the NSAG that correspond to a current service of the apparatus.

In an implementation, the NSAG information includes a network slice identifier corresponding to a current service of the apparatus, a correspondence between a plurality of network slice identifiers and NSAG identifiers, and NSAG priorities of a plurality of NSAGs.

In an implementation, the access stratum entity is further configured to: determine, based on the NSAG information, an NSAG identifier with a highest NSAG priority in NSAG identifiers corresponding to the current service, determine a plurality of groups of random access parameters based on the NSAG identifier with the highest priority, and select one group of random access parameters from the plurality of groups of random access parameters.

In an implementation, the access stratum entity is further configured to: obtain, based on the NSAG information, the NSAG identifier corresponding to the current service, determine a corresponding plurality of groups of random access parameters based on the NSAG identifier, and select one group of random access parameters from the plurality of groups of random access parameters.

In an implementation, the selecting one group of random access parameters from the plurality of groups of random access parameters specifically includes one or more of the following manners: manner 1: selecting one group of random access parameters associated with a largest quantity of NSAGs from the plurality of groups of random access parameters; manner 2: selecting one group of random access parameters associated with a largest quantity of service features from the plurality of groups of random access parameters; manner 3: selecting one group of random access parameters from the plurality of groups of random access parameters in descending order of feature priorities; or manner 4: selecting one group of random access parameters from the plurality of groups of random access parameters in descending order of NSAG priorities.

In an implementation, the access stratum entity is further configured to determine a first group of random access parameters, where the first group of random access parameters is determined from the plurality of groups of random access parameters in descending order of associated feature priorities.

In an implementation, if it is determined that the first group of random access parameters is not unique, that the access stratum entity selects one group of random access parameters from the plurality of groups of random access parameters includes: selecting one group of random access parameters from a plurality of first groups of random access parameters in descending order of NSAG priorities.

In an implementation, the apparatus is further configured to receive indication information from a network device, where the indication information indicates a manner of selecting the random access parameter by the apparatus, or indicates manners of selecting the random access parameter by the apparatus and priorities of the manners.

In an implementation, the random access parameter includes a random access resource. The apparatus is further configured to initiate random access by using the resource.

According to a fourth aspect, a communication apparatus is provided. The apparatus includes: a processing module, configured to determine a random access parameter selection manner; and a sending module, configured to send indication information to a terminal device, where the indication information indicates a manner of selecting a random access parameter by the terminal device, or indicates manners of selecting a random access parameter by the terminal device and priorities of the manners.

In an implementation, the indication information indicates one or more of the following manners: manner 1: selecting one group of random access parameters associated with a largest quantity of NSAGs from a plurality of groups of random access parameters; manner 2: selecting one group of random access parameters associated with a largest quantity of service features from a plurality of groups of random access parameters; manner 3: selecting one group of random access parameters from a plurality of groups of random access parameters in descending order of feature priorities; or manner 4: selecting one group of random access parameters from a plurality of groups of random access parameters in descending order of NSAG priorities.

According to a fifth aspect, a terminal device is provided. The communication device includes a processor and a memory coupled to the processor. The memory stores computer program code, the computer program code includes computer instructions, and when the processor executes the computer instructions, the terminal device is enabled to perform the method according to any one of the first aspect.

According to a sixth aspect, a network device is provided. The network device includes a processor and a memory coupled to the processor. The memory is coupled to the processor, the memory stores computer program code, the computer program code includes computer instructions, and when the processor executes the computer instructions, the network device is enabled to perform the method according to any one of the second aspect.

According to a seventh aspect, a computer-readable storage medium is provided. The computer-readable storage medium stores computer-executable instructions, and when the computer-executable instructions are invoked by a computer, the computer is enabled to perform the method according to any one of the first aspect.

According to an eighth aspect, a computer-readable storage medium is provided. The computer-readable storage medium stores computer-executable instructions, and when the computer-executable instructions are invoked by a computer, the computer is enabled to perform the method according to any one of the second aspect.

According to a ninth aspect, a computer program product including instructions is provided. When the computer program product runs on a computer, the computer is enabled to perform the method according to any one of the first aspect.

According to a tenth aspect, a computer program product including instructions is provided. When the computer program product runs on a computer, the computer is enabled to perform the method according to any one of the second aspect.

According to an eleventh aspect, a chip is provided. The chip is coupled to a memory, and is configured to: read and execute program instructions stored in the memory, to implement the method according to any one of the first aspect.

According to a twelfth aspect, a chip is provided. The chip is coupled to a memory, and is configured to: read and execute program instructions stored in the memory, to implement the method according to any one of the second aspect.

According to a thirteenth aspect, a communication system is provided. The communication system includes the communication apparatus according to the third aspect and the communication apparatus according to the fourth aspect.

It may be understood that any communication apparatus, terminal device, network device, computer-readable storage medium, computer program product, chip, or communication system provided above may be configured to perform the corresponding method provided above. Therefore, for beneficial effects that can be achieved by the communication apparatus, the terminal device, the network device, the computer-readable storage medium, the computer program product, the chip, or the communication system, refer to beneficial effects in the corresponding method provided above. Details are not described herein again.

### BRIEF DESCRIPTION OF DRAWINGS

FIG. 1 is a diagram of a system architecture of a communication system according to an embodiment of this application;
FIG. 2 is a diagram of a system architecture of a communication apparatus according to an embodiment of this application;
FIG. 3 is a schematic flowchart of random access initialization and resource selection of a terminal device according to an embodiment of this application;
FIG. 4 to FIG. 7 are schematic flowcharts 1 to 4 of a random access parameter selection method according to embodiments of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, an implementation environment and an application scenario of embodiments of this application are briefly described.

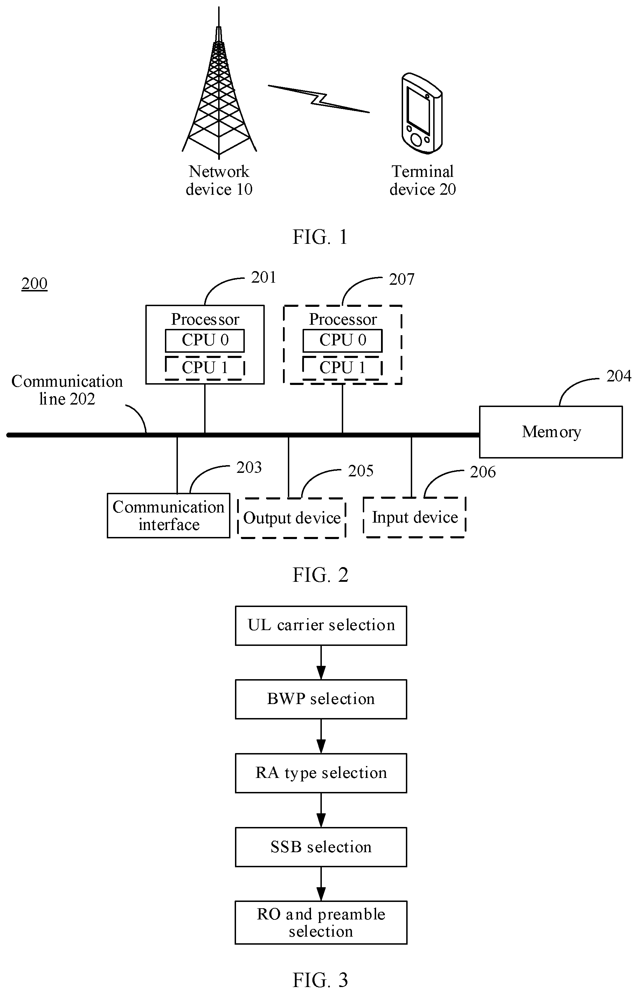

The technical solutions provided in this application may be applied to various communication systems, for example, a fifth generation (fifth generation, 5G) communication system, a future evolved system, or a plurality of converged communication systems, or may be applied to a communication system. The technical solutions provided in this application may be applied to a plurality of application scenarios of the foregoing communication system, for example, enhanced mobile broadband (enhanced mobile broadband, eMBB) communication, ultra-reliable and low-latency communication (ultra-reliable & low-latency communication, uRLLC), and massive machine-type communications (massive machine-type communications, mMTC). A method provided in embodiments of this application is described below by using only FIG. 1 as an example.

FIG. 1 is a diagram of an architecture of a communication system 100 according to an embodiment of this application. In FIG. 1, the communication system 100 may include a network device 10 and one or more terminal devices 20 connected to the network device 10. FIG. 1 is merely a diagram, and does not constitute a limitation on a scenario to which the technical solutions provided in this application are applicable.

It should be noted that FIG. 1 is merely an example framework diagram, and a quantity of nodes included in FIG. 1 is not limited. In addition to functional nodes shown in FIG. 1, other nodes such as a core network device, a gateway device, and an application server may be further included. This is not limited. An access network device communicates with the core network device by using a wired network or a wireless network, for example, through a next generation (Next Generation, NG) interface.

The network device is mainly configured to implement functions such as resource scheduling, radio resource management, and radio access control of the terminal device. Specifically, the network device may include any node of a base station, a wireless access point, a transmission receive point (Transmission Receive Point, TRP), a transmission point (Transmission Point, TP), and another access node. In embodiments of this application, an apparatus configured to implement a function of the network device may be the network device, or may be an apparatus, for example, a chip system, that can support the network device in implementing the function. The apparatus may be installed in the network device or used in combination with the network device. In the technical solutions provided in embodiments of this application, an example in which the apparatus configured to implement the function of the network device is a network device is used to describe the technical solutions provided in embodiments of this application.

The terminal device may be user equipment (User Equipment, UE), a mobile station (Mobile Station, MS), a mobile terminal (Mobile Terminal, MT), or the like. Specifically, the terminal device may be a mobile phone, a tablet computer, or a computer with a wireless transceiver function, or may be a virtual reality (Virtual Reality, VR) terminal, an augmented reality (Augmented Reality, AR) terminal, a wireless terminal in industrial control, a wireless terminal in self-driving, a wireless terminal in telemedicine, a wireless terminal in a smart grid, a wireless terminal in a smart city, a smart home, a vehicle-mounted terminal, a wearable terminal device, or the like. An apparatus configured to implement a function of the terminal device may be a conventional terminal device or a narrowband terminal, or may be an apparatus, for example, a chip system, that can support the terminal device to implement the function. The apparatus may be installed in the terminal device or used in combination with the terminal device. The following provides descriptions by using an example in which the apparatus configured to implement the function in this application is the terminal device.

In FIG. 1, the network device may provide a wireless access service for the terminal device. The network device corresponds to a service coverage area (also referred to as a serving cell or a cell). A terminal device that enters the service coverage area of the network device may communicate with the network device through a Uu interface link, to receive a radio access service provided by the network device. The Uu interface link may be classified into an uplink (uplink, UL) and a downlink (downlink, DL) based on directions of data transmitted through the Uu interface link.

When the terminal device 20 is located in a service coverage area of the network device 10, after performing cell signal search, the terminal device may obtain downlink synchronization with the network device. The terminal device establishes a connection to the network device by using a random access procedure, obtains uplink synchronization, and then may send uplink data to the network device through the UL.

In a possible implementation, the terminal device 20 may perform uplink synchronization with the network device 10 by using a four-step random access procedure or a two-step random procedure. After the uplink synchronization, the terminal device 20 may send a service request to the network device 10.

During specific implementation, network elements shown in FIG. 1, for example, the terminal device and the network device, may use a composition structure shown in FIG. 2 or include components shown in FIG. 2. FIG. 2 is a diagram of a structure of a communication apparatus 200 according to an embodiment of this application. When the communication apparatus 200 has a function of the terminal device described in embodiments of this application, the communication apparatus 200 may be a terminal device, or a chip or a system on chip in the terminal device. When the communication apparatus 200 has a function of the network device described in embodiments of this application, the communication apparatus 200 may be a network device, or a chip or a system on chip in the network device.

As shown in FIG. 2, the communication apparatus 200 may include a processor 201, a communication line 202, and a communication interface 203. Further, the communication apparatus 200 may include a memory 204. The processor 201, the memory 204, and the communication interface 203 may be connected to each other through the communication line 202.

The processor 201 may be a central processing unit (Central Processing Unit, CPU), a general-purpose processor, a network processor (Network Processor, NP), a digital signal processor (Digital Signal Processing, DSP), a microprocessor, a microcontroller, a programmable logic device, or any combination thereof. The processor 201 may alternatively be another apparatus having a processing function, for example, a circuit, a component, or a software module.

The communication line 202 is configured to transmit information between components included in the communication apparatus 200.

The communication interface 203 is configured to communicate with another device or another communication network. The another communication network may be an Ethernet, a radio access network (Radio Access Network, RAN), a wireless local area network (Wireless Local Area Network, WLAN), or the like. The communication interface 203 may be an interface circuit, a pin, a radio frequency module, a transceiver, or any apparatus that can implement communication.

The memory 204 is configured to store instructions. The instructions may be a computer program.

The memory 204 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that the memory 204 may exist independently of the processor 201, or may be integrated with the processor 201. The memory 204 may be configured to store instructions, program code, some data, or the like. The memory 204 may be located in the communication apparatus 200, or may be located outside the communication apparatus 200. This is not limited. The processor 201 is configured to execute the instructions stored in the memory 204, to perform a method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device such as a keyboard, a mouse, a microphone, or a joystick, and the output device 205 is a device such as a display or a speaker.

It should be noted that the communication apparatus 200 may be a desktop computer, a portable computer, a network server, a mobile phone, a tablet computer, a wireless terminal, an embedded device, a chip system, or a device having a structure similar to a structure in FIG. 2. In this embodiment of this application, the chip system may include a chip, or may include a chip and another discrete component. In addition, the composition structure shown in FIG. 2 does not constitute a limitation on the communication apparatus. In addition to the components shown in FIG. 2, the communication apparatus may include more or fewer components than those shown in the figure, or combine some components, or have different component arrangements.

The following describes a process of RA initialization and RA resource selection before the terminal device performs random access (Random Access, RA).

In a 5G technology, before sending a random access preamble (preamble), the terminal device needs to first perform RA initialization, including selecting a carrier and a bandwidth part (BandWidth Part, BWP) on which RA is performed, and determining an RA type, for example, a four-step access type or a two-step access type. Then, in an RA resource selection process, the terminal device needs to select a downlink transmit beam, determine, by using a corresponding physical random access channel (Physical Random Access Channel, PRACH), an occasion (RACH Occasion, RO) for transmitting random access information, and notify a base station of a selection result by sending the preamble to the base station, to implement downlink beam alignment.

RA initialization is generally performed once in each RA procedure, and an RA resource selection process is re-performed before each transmission of a first message (Msg1 or MsgA) of random access. As shown in FIG. 3, a specific procedure in which a terminal device configures RA initialization and RA resource selection includes the following steps.

### Step 1: UL carrier selection

If a network device configures a normal uplink (normal uplink, NUL) and a supplementary uplink (Supplementary uplink, SUL) for the terminal device, the terminal device determines, based on reference signal received power (Reference Signal Received Power, RSRP) of a downlink reference signal, that if the RSRP of the downlink signal is greater than a threshold rsrp-ThresholdSSB-SUL configured by the network device, the terminal device performs random access on the NUL, or if the RSRP of the downlink signal is not greater than a threshold rsrp-ThresholdSSB-SUL configured by the network device, the terminal device performs random access on the SUL.

### Step 2: BWP selection

The terminal device determines whether there is an available RAresource on an active uplink BWP, and if there is no available RAresource on the active uplink BWP, switching to an indicated initial BWP is performed based on a configured parameter initialUplinkBWP.

### Step 3: RA type selection

If an RA resource for two-step access and an RA resource for four-step access are configured on the selected BWP, when the RSRP of the downlink reference signal is greater than a threshold msgA-RSRP-Threshold, the terminal device may select a two-step access type, or when the RSRP of the downlink reference signal is not greater than a threshold msgA-RSRP-Threshold, the terminal device selects a four-step access type.

### Step 4: SSB selection

The terminal device determines, based on synchronization signal based reference signal received power (Synchronization Signal based Reference Signal Received Power, SS-RSRP) of SSBs obtained through blind detection, that if there is an SSB whose SS-RSRP is greater than a threshold rsrp-ThresholdSSB configured by the network device, one SSB is selected from the SSB, or if there is no SSB whose SS-RSRP is greater than a threshold rsrp-ThresholdSSB configured by the network device, one SSB may be randomly selected from all the SSBs obtained through blind detection.

### Step 5: RO and preamble selection

The terminal device may determine, based on a parameter configured by the network device, an RO, and a correspondence between the RO, a preamble, an RA type, and an SSB, and then select a corresponding RO and preamble based on the RA type and the SSB that are determined in the foregoing steps.

In the foregoing RA initialization process, corresponding RA priority parameters (that is, RA-Prioritization) are configured for different RA types, including a ramping step indicating transmit power in a preferential random access procedure, that is, a parameter power ramping step of high-priority powerRampingStepHighPriority, and a parameter, namely, a backoff indication scaling factor scalingFactorBI (backoff indication Backoff Indication, BI for short), indicating backoff time used to control an interval between two RO requests of UE.

Currently, for a network slice service, the network device configures a network slice-specific RA resource for the terminal device. Based on different RA resources, the network device may identify a network slice currently requested by the terminal device, and determine whether a service request for the network slice can be accepted, to avoid an unnecessary signaling exchange procedure between an access network and a core network. Currently, RA resources of an air interface may be divided into several different RA resource sets, and each RA resource set may correspond to one or more feature (feature) attributes of a network service.

The feature attributes of the network service may mainly include one or more of a network slice, small data transmission SDT, coverage enhancement CE, a reduced capability RedCap, or the like.

An application object of the SDT is a massive machine-type communications (Massive Machine-Type Communications, mMTC) scenario or device. When a data packet generated by the terminal device is less than or equal to a specific threshold, and received power of a corresponding downlink reference signal is greater than or equal to a specific threshold, the SDT may be used for data transmission.

The CE may also be a third message repetition (Msg3 Repetition) of random access, and is applicable to a terminal device that is far away from a base station. When the terminal device detects, through measurement, that received power of a reference signal is less than a specific threshold, the terminal device may be determined as a long-distance user. Coverage enhancement may be implemented by repeatedly sending an Msg3.

An application object of the RedCap is a wearable device, video surveillance, an industrial wireless sensor, or the like. By reducing a maximum bandwidth supported by the terminal device, a quantity of transmit and receive antennas, and the like, costs are reduced, and a battery life is increased.

The network slice, a slice (slice) for short, means dividing a physical network into a plurality of virtual networks that include specific network functions, network topologies, and network resources, to meet service function and quality of service requirements of different network slice users. The network slice enables an operator to build a plurality of dedicated, virtualized, and isolated logical subnets on a general physical platform, to meet different requirements of different services of users for network capabilities, and provide end-to-end (end-to-end, E2E) logical networks that meet specific service requirements.

An identifier of the network slice may be represented by using network slice selection assistance information (network slice selection assistance information, NSSAI). The NSSAI includes one or more pieces of single NSSAI (single NSSAI, S-NSSAI), a set of one group of pieces of S-NSSAI.

In an implementation, the S-NSSAI includes a slice/service type (slice/service type, SST) and a slice differentiator (slice differentiator, SD). The SST includes a feature and a service feature of a standardized or operator-defined network slice. The SD is optional information for supplementing the SST, used to distinguish between different network slices of a same SST.

Currently, one or more network slices may be grouped based on different service functions and attributes, referred to as an NSAG, and identified by using an NSAG ID. For example, an NSAG #1 includes a plurality of network slices used for cell reselection, and an NSAG#2 includes a plurality of network slices used for random access.

Specifically, there is a correspondence between one or more pieces of S-NSSAI(s) and a specific NSAG, and a correspondence between an NSAG and S-NSSAI(s) is unique in a specific area. A characteristic of the correspondence includes the following aspects:
1. Bidirectional mapping, including a correspondence between an NSAG ID value and related S-NSSAI.
2. The correspondence between the S-NSSAI and the NSAG ID may be configured by an operation, administration, and maintenance (Operation, Administration, and Maintenance, OAM) network element for an access network device (for example, a gNB). The access network device sends the correspondence to a core network (Core Network, CN), and then the CN provides the correspondence to the terminal device by using a non-access stratum (Non-access stratum, NAS) message.
3. A granularity of area validity is a tracking area (Tracking Area, TA). When the CN sends a correspondence between the NSAG and a network slice identifier to the terminal device by using the NAS message, effective area validity information corresponding to the correspondence may be also carried, so that the terminal device can determine, based on the area validity information, a valid area of the correspondence between the NSAG and the network slice identifier. The area validity information may include one or more pieces of TA identifier information, and the TA identifier information may be a tracking area code (Tracking Area Code, TAC) identifier. Generally, a quantity of such NSAGs cannot exceed 4.
4. The network slice is allowed not to be associated with any NSAG.
5. One network slice may be associated with NSAGs for different purposes. To be specific, NSAGs for different purposes may have respective correspondences between NSAGs and network slices. For example, a slice #1 may be associated with an NSAG #1 used for cell reselection and an NSAG #2 used for RA. However, for a same purpose, one slice can be associated with only one NSAG for the same purpose, but cannot be associated with a plurality of NSAGs for the same purpose. For example, the slice #1 can be associated with a maximum of one NSAG #1 used for cell reselection, and the slice #1 can be associated with a maximum of one NSAG #2 used for RA.

In conclusion, the feature attribute of the network slice may be represented by using an NSAG ID associated with the network slice service. A service that triggers random access and that is of the terminal device may correspond to one or more feature attributes, and may be represented in a form of a feature combination, for example, may be represented as {network slice (NSAG #1), CE, SDT}.

Specifically, each RA resource set (which may be configured by using a parameter Additional RACH-ConfigCommon-r17) configured by the network device for the terminal device corresponds to one specific feature combination, that is, the feature combination corresponds to only one RA resource set. With reference to the foregoing RA resource selection process before the terminal device performs random access, when the terminal device triggers RA based on a specific service, after selecting an RA type, an access stratum (Access stratum, AS) of the terminal device selects, according to a specific rule based on an NSAG ID provided by an upper layer of the terminal device, a specific RA resource set to be used, and selects a corresponding RA priority parameter (that is, RA-Prioritization).

Similar to RA resource selection, currently, for the network slice service, the network device may configure, based on an NSAG, a network slice-specific RA priority parameter for the terminal device, and each RA priority parameter corresponds to one NSAG ID list. When the terminal device triggers RA based on the specific service, the access stratum of the terminal device may select the corresponding RA priority parameter based on the NSAG ID provided by the upper layer.

There may be one or more network slices for which the terminal device triggers an RA service, and there may be one or more corresponding NSAG IDs. In addition, the RA service triggered by the terminal device may correspond to one or more feature attributes. Therefore, how the terminal device selects a unique group of RA resources and RA priority parameters based on a plurality of NSAG IDs is a problem that needs to be resolved in this application.

Embodiments of this application provide a random access parameter selection method, applied to a scenario in which a service that triggers random access and that is of a terminal device corresponds to a plurality of network slices, and the plurality of network slices correspond to a plurality of different NSAGs. A rule for selecting a random access parameter by the terminal device is optimized, so that different terminal devices can select an RA resource and an RA priority parameter for random access based on a configured rule, to avoid a resource conflict between different terminal devices, and improve random access efficiency and random access channel resource utilization.

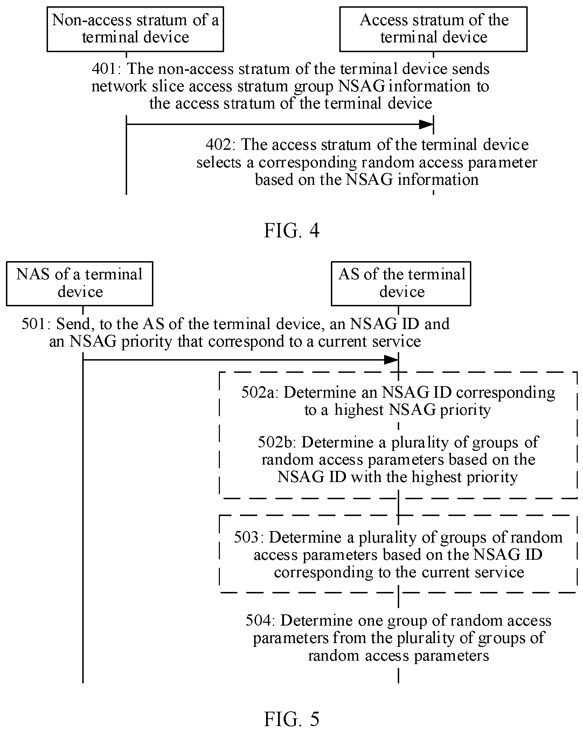

As shown in FIG. 4, the method may include the following steps.

401: A non-access stratum of a terminal device sends network slice access stratum group NSAG information to an access stratum of the terminal device.

In an implementation, the NSAG information may include an NSAG identifier (namely, an NSAG ID). The NSAG identifier may be an NSAG ID corresponding to a current service that triggers random access and that is of the terminal device, or an identifier of an NSAG with a highest NSAG priority in a plurality of NSAGs.

In this implementation, the non-access stratum NAS of the terminal device may determine one or more NSAG IDs based on one or more network slice identifiers S-NSSAI(s) corresponding to the current service and a correspondence between an NSAG identifier and a network slice identifier.

Specifically, the NAS of the terminal device may receive, in advance from a core network device, the NSAG information used for random access. For example, the NSAG information may be all NSAG information associated with a network slice that can be used for random access and that is in a network slice to which the terminal device subscribes.

The NSAG information may include information about one or more NSAGs, and may specifically include an NSAG ID, a correspondence between an NSAG ID and S-NSSAI(s), a priority of the NSAG, and the like.

When the terminal device triggers random access due to a specific service, the NAS of the terminal device may determine, based on S-NSSAI(s) corresponding to the service and a correspondence between an NSAG ID and S-NSSAI(s), one or more NSAG IDs associated with the service.

Then, the NAS of the terminal device may send one determined NSAG ID to the access stratum AS of the terminal device, or the NAS may determine the NSAG ID with the highest NSAG priority from the plurality of NSAGs, and send the NSAG ID to the AS of the terminal device.

In other words, in the foregoing embodiment, the NSAG information sent by the NAS of the terminal device to the AS may include only an identifier ID of one NSAG, used by the AS to select a random access parameter based on the NSAG ID.

Alternatively, the NSAG information may include an NSAG identifier and an NSAG priority.

In an implementation, the NAS of the terminal device may send, to the AS of the terminal device, all the NSAG information obtained from the core network device.

In another implementation, the NSAG information may include an identifier ID of one or more NSAGs and an NSAG priority of the one or more NSAGs that correspond to the current service of the terminal device. In other words, the NAS of the terminal device may first determine, based on the network slice identifier corresponding to the current service and with reference to the NSAG information obtained from the core network, NSAG information corresponding to the current network slice, and then send, to the AS, determined one or more NSAG IDs and NSAG priorities that correspond to the current service.

402: The access stratum of the terminal device selects a corresponding random access parameter based on the NSAG information.

Correspondingly, the access stratum AS of the terminal device receives the NSAG information described above, selects, based on the NSAG information and a correspondence between an NSAG and a random access parameter, a random access parameter associated with an NSAG ID indicated by the NSAG information, to determine an available random access parameter, and then selects one group of random access parameters based on one or more of a service feature priority, a quantity of features, a quantity of NSAGs, or the NSAG priority.

In an implementation, the random access parameter includes a random access resource, a random access priority parameter RA-Prioritization, and the like, and the terminal device may initiate random access to an access network device by using the random access resource. For a specific interaction process of random access, refer to a related technology. This is not specifically limited in this application.

It should be noted that, in this embodiment of this application, specific implementation of steps performed by the AS of the terminal device may be implemented by a radio resource control (Radio Resource Control, RRC) layer or a MAC layer of the terminal device. This is not limited in this application. Details are not described in subsequent embodiments.

The following describes, with reference to the NSAG information in the several implementations in the foregoing 401, several random access parameter selection methods and processes provided in this application.

Embodiment 1: The NAS of the terminal device sends only one NSAG ID (which may be, for example, an NSAG ID with a highest NSAG priority) to the AS, and the AS of the terminal device determines a plurality of groups of random access parameters based on the NSAG ID, and then selects a random access parameter based on one or more of a priority of a feature attribute or a quantity of features.

In this implementation, if the AS of the terminal device may determine one group of available random access parameters based on the NSAG ID, the AS of the terminal device determines to initiate random access by using the random access parameter. If the AS of the terminal device may determine a plurality of groups of random access parameters based on the NSAG ID, the AS of the terminal device needs to select one group of random access parameters from the plurality of groups of random access parameters. Specifically, selection may be performed in at least one of the following manners.

Manner 1: Select one group of random access parameters associated with a largest quantity of NSAGs from the plurality of groups of random access parameters.

In other words, the AS of the terminal device determines, from the plurality of groups of random access parameters, one group of random access parameters associated with the largest quantity of NSAGs in feature attributes corresponding to the RA parameter.

For example, the feature attributes corresponding to the current service of the terminal device include a network slice, and network slice access stratum groups corresponding to the network slice are an NSAG #1 and an NSAG #2, where a priority of the NSAG #1 is higher than that of the NSAG #2. In this case, a correspondence that is between an RA parameter and an NSAG and that is configured by a network may be in the following form:
RA parameter #1 <-> (NSAG #1); and
RA parameter #2 <-> (NSAG #1, NSAG #2).

In this embodiment of this application, "<->" may be used to represent a correspondence between an RA parameter and a service feature feature(s), and "()" represents an NSAG ID list. There may be different representation manners in a specific implementation process. This is not limited in this application, and is not described again in the following.

The AS of the terminal device may obtain, based on the NSAG #1 with the highest priority, that corresponding random access parameters are the RA parameter #1 and the RA parameter #2.

Then, selection is performed based on the foregoing manner 1. A quantity of NSAGs associated with the RA parameter #1 is 1, and a quantity of NSAGs associated with the RA parameter #2 is 2. Therefore, in this example, the AS of the terminal device may select the RA parameter #2 as the random access parameter.

In an implementation, the manner 1 of selecting one group from the plurality of groups of random access parameters is applicable to a scenario in which the feature attribute corresponding to the current service of the terminal device includes merely a network slice. In other words, the current service is associated with merely the feature network slice Slice, and not associated with any features such as CE, SDT, or a RedCap. Therefore, the random access parameter may be selected without considering another feature, and may be selected based merely on the quantity of NSAGs corresponding to the random access parameter.

Manner 2: Select one group of random access parameters associated with a largest quantity of service features from the plurality of groups of random access parameters.

In other words, the AS of the terminal device determines, from the plurality of groups of random access parameters, one group of random access parameters associated with the largest quantity of service features of the current service of the terminal device in the feature attributes corresponding to the RA parameter.

The quantity of service features is a sum of quantities of the foregoing service feature attributes such as the network slice, the CE, the SDT, or the RedCap. In an implementation (2.1), a network slice service is considered as one service feature, and regardless of how many NSAGs with specific functions are associated with the network slice, the quantity is considered as 1. In another implementation (2.2), an NSAG associated with a network slice service is considered as a service feature. If the network slice corresponding to the service is associated with a plurality of NSAGs, the quantity of service features may include a quantity of associated NSAGs.

For example, the feature attributes corresponding to the current service of the terminal device include a network slice and other features, for example, a network slice (NSAG #1, NSAG #2, NSAG #3), SDT, and CE. In this case, a correspondence that is between an RA parameter and a service feature and that is configured by the network may be in the following form:
RA parameter #1 <-> (NSAG #1), SDT; and
RA parameter #2 <-> (NSAG #1, NSAG #2, NSAG #3).

The AS of the terminal device may obtain, based on the NSAG #1, that corresponding random access parameters are the RA parameter #1 and the RA parameter #2, where the RA parameter #1 is further associated with the service feature SDT.

In an implementation, if the AS of the terminal device performs selection in the foregoing manner 2, and if the network slice service is considered, as in the foregoing manner 2.1, as one service feature regardless of how many NSAGs with specific functions are associated with the network slice, it is determined that a quantity of service features associated with the RA parameter #1 is 2, and a quantity of service features associated with the RA parameter #2 is 1. Therefore, in this example, the AS of the terminal device may select the RA parameter #1 as the random access parameter.

If the quantity of service features may include, as in the foregoing manner 2.2, the quantity of associated NSAGs, a quantity of service features associated with the RA parameter #1 is 2, and a quantity of service features associated with the RA parameter #2 includes the quantity of NSAGs, and therefore is 3. In this example, the AS of the terminal device may select the RA parameter #2 as the random access parameter.

Manner 3: Select one group of random access parameters from the plurality of groups of random access parameters in descending order of feature priorities.

In other words, the AS of the terminal device determines to select, from the plurality of groups of random access parameters, one group of random access parameters in descending order of feature priorities associated with the current service of the terminal device in the feature attributes corresponding to the RA parameter.

It can be learned from the foregoing descriptions that information broadcast by the network device to the terminal device includes a priority configuration of the service feature. Specifically, the AS of the terminal device determines, from the plurality of groups of random access parameters, an RA parameter with a highest feature priority associated with the current service. If there is only one available RA parameter, the RA parameter is selected. If there are a plurality of groups of RA parameters with a highest feature priority, an RA parameter with a highest feature priority in remaining service features is selected from the plurality of groups of RA parameters, and so on. If no available RA parameter is found, the AS continues to search for an RA parameter with a highest feature priority in remaining service features until the RA parameter is determined as a group of available RA parameters.

For example, the feature attributes corresponding to the current service of the terminal device include a network slice and other features, for example, a network slice (NSAG #1, NSAG #2), SDT, and CE. In this case, a correspondence that is between an RA parameter and a service feature and that is configured by the network may be in the following form:
RA parameter #1 <-> (NSAG #1), SDT; and
RA parameter #2 <-> (NSAG #1), CE, where
priorities of service features in descending order are as follows: RedCap>network slice>CE>SDT.

The AS of the terminal device may obtain, based on the NSAG #1, that corresponding random access parameters are the RA parameter #1 and the RA parameter #2, where the RA parameter #1 is further associated with the service feature SDT, and the RA parameter #2 is further associated with the service feature CE.

In an implementation, if the AS of the terminal device performs selection in the foregoing manner 3, in the two groups of RA parameters, the network slice has a highest priority in the associated service feature priorities, and both the two groups of RA parameters include the network slice group NSAG #1 with a same priority. In this case, priorities of the remaining service features need to be further determined. A priority of the CE is higher than that of the SDT, that is, a priority of the service feature CE associated with the RA parameter #2 is higher than that of the service feature SDT associated with the RA parameter #1. Therefore, the AS of the terminal device may select the RA parameter #2 as the random access parameter.

It can be learned from the foregoing example that random access parameters obtained in different selection manners may be different. Therefore, this embodiment of this application provides a selection method for selecting a random access parameter by the terminal device, so that different terminal devices can select a group of random access parameters based on a same selection manner. The selection manner is flexible and configurable. Therefore, a probability of a resource conflict between different terminal devices during random access can be reduced, and random access efficiency can be improved.

Embodiment 2: NSAG information sent by the NAS of the terminal device to the AS of the terminal device includes an identifier ID of one or more NSAGs and an NSAG priority of the one or more NSAGs that correspond to the current service of the terminal device.

In other words, the NAS of the terminal device may first determine, based on a network slice identifier (for example, S-NSSAI(s)) corresponding to the current service and with reference to a correspondence between a network slice identifier and an NSAG ID in NSAG information obtained from a core network, NSAG information of a network slice corresponding to the current service, and then send determined one or more NSAG IDs and NSAG priorities to the AS. Then, the AS of the terminal device determines one group of random access parameters based on NSAG information corresponding to the current service and one or more of a service feature priority, the NSAG priority, or a quantity of service features.

As shown in FIG. 5, the implementation may include the following steps.

501: The NAS of the terminal device sends, to the AS of the terminal device, the NSAG ID and the NSAG priority that correspond to the current service.

Correspondingly, after receiving a plurality of NSAG IDs and NSAG priorities that correspond to the current service, the AS of the terminal device may perform the following steps 502a and 502b and 504, or perform the following steps 503 and 504.

502a: The AS of the terminal device determines an NSAG ID corresponding to a highest NSAG priority.

The AS of the terminal device may first determine the NSAG ID with the highest priority in the plurality of NSAG IDs based on the plurality of NSAG IDs that are provided by the NAS and that are associated with the service and the NSAG priorities corresponding to the plurality of NSAG IDs.

502b: The AS of the terminal device determines a plurality of groups of random access parameters based on the NSAG ID with the highest priority.

The AS of the terminal device may determine a plurality of groups of available RA parameters based on the NSAG ID with the highest priority and a correspondence between an NSAG ID and an RA parameter, and then perform step 504 to select one group from the plurality of groups of RA parameters.

503: The AS of the terminal device determines a plurality of groups of random access parameters based on the NSAG ID corresponding to the current service.

The AS of the terminal device may first determine, based on the plurality of NSAG IDs that are associated with the service and that are provided by the NAS and a correspondence between an NSAG ID and an RA parameter, a plurality of groups of available RA parameters corresponding to the plurality of NSAG IDs, and then perform step 504 to select one group from the plurality of groups of RA parameters.

504: The AS of the terminal device determines one group of random access parameters from the plurality of groups of random access parameters.

In this implementation, if the AS of the terminal device may determine one group of available random access parameters after step 502b or 503 is performed, step 504 does not need to be performed, and the AS determines to initiate random access by using the random access parameter. If the AS of the terminal device may determine a plurality of groups of random access parameters after step 502b or 503 is performed, the AS of the terminal device needs to select one group of random access parameters from the plurality of groups of random access parameters. Selection may be performed in at least one of the following manners.

Manner 1: Select one group of random access parameters associated with a largest quantity of NSAGs from the plurality of groups of random access parameters.

In other words, the AS of the terminal device may determine, from the plurality of groups of random access parameters, one group of random access parameters associated with the largest quantity of NSAGs in feature attributes corresponding to the RA parameter.

In an implementation, a manner of selecting the RA parameter from the plurality of groups of random access parameters based on the quantity of associated NSAGs is applicable to a scenario in which the feature attribute corresponding to the current service of the terminal device includes merely a network slice. In other words, the current service is associated with merely the feature network slice Slice. The random access parameter may be selected based on the quantity of NSAGs corresponding to the random access parameter.

For example, the features corresponding to the service of the terminal device include a network slice (NSAG #1, NSAG #2), SDT, and CE, where a priority of the NSAG#1 is higher than that of the NSAG#2. In this case, based on a broadcast message of the network device, after the terminal device performs the foregoing steps 502a and 502b, that is, the AS of the terminal device determines the available random access parameter based on the NSAG #1 with a highest priority, or after the terminal device performs step 503, that is, the AS of the terminal device determines the available random access parameter based on the NSAG #1 and the NSAG #2, it may be determined that a correspondence between an available RA parameter and a service feature is in the following form:
RA parameter #1 <-> (NSAG #1); and
RA parameter #2 <-> (NSAG #1, NSAG #2).

Then, selection is performed based on the foregoing manner 1. A quantity of NSAGs associated with the RA parameter #1 is 1, and a quantity of NSAGs associated with the RA parameter #2 is 2. Therefore, in this example, the AS of the terminal device may select the RA parameter #2 as the random access parameter.

If the feature attributes corresponding to the current service of the terminal device further include another feature in addition to the feature network slice, for example, any features such as CE, SDT, or a RedCap, the AS of the terminal device may select the RA parameter based on one or more of the following other manners. Alternatively, the AS of the terminal device may first perform selection based on the manner 2, 3, or 4. When one group of RA parameters cannot be determined, that is, not a unique group of random access parameters is selected, one group of RA parameters associated with a largest quantity of NSAGs is then selected based on the quantity of associated NSAGs. This is subsequently described with reference to another selection manner and an example. Details are not described herein.

Manner 2: Select one group of random access parameters associated with a largest quantity of service features from the plurality of groups of random access parameters.

In other words, the AS of the terminal device determines, from the plurality of groups of random access parameters, one group of random access parameters associated with the largest quantity of service features of the current service of the terminal device in the feature attributes corresponding to the RA parameter.

Specifically, in the manner 2 in the foregoing Embodiment 1, for the quantity of service features, only the network slice service may be considered as one service feature, or each NSAG with a specific function corresponding to the network slice service may be considered as one service feature, in other words, the quantity of service features may include the quantity of NSAGs. For a specific determining manner, refer to related descriptions of the manner 2.1 and the manner 2.2. Details are not described herein again.

For example, the features corresponding to the service of the terminal device include a network slice (NSAG #1, NSAG #2), SDT, and CE. An example in which the AS of the terminal device performs the foregoing step 503 based on the broadcast message of the network device is used. To be specific, after the AS of the terminal device determines the available random access parameter based on the NSAG #1 and the NSAG #2, it may be determined that a correspondence between an available RA parameter and a service feature is in the following form:
RA parameter #1 <-> (NSAG #1), SDT; and
RA parameter #2 <-> (NSAG #2), SDT, CE.

Then, selection is performed based on the foregoing manner 2. A quantity of service features associated with the RA parameter #1 is 2, and a quantity of NSAGs associated with the RA parameter #2 is 3. Therefore, in this example, the AS of the terminal device may select the RA parameter #2 as the random access parameter.

Manner 3: Select one group of random access parameters from the plurality of groups of random access parameters in descending order of feature priorities.

In other words, the AS of the terminal device determines to select, from the plurality of groups of random access parameters, one group of random access parameters in descending order of feature priorities associated with the current service of the terminal device in the feature attributes corresponding to the RA parameter.

For example, the features corresponding to the service of the terminal device include a network slice (NSAG #1, NSAG #2), SDT, and CE. An example in which the AS of the terminal device performs the foregoing step 503 based on the broadcast message of the network device is used. To be specific, after the AS of the terminal device determines the available random access parameter based on the NSAG #1 and the NSAG #2, it may be determined that a correspondence between an available RA parameter and a service feature is in the following form:
RA parameter #1 <-> (NSAG #1), SDT; and
RA parameter #2 <-> (NSAG #2), CE, where
priorities of service features in descending order are as follows: RedCap>network slice>CE>SDT.

Then, selection is performed based on the foregoing manner 3. In the service features of the terminal device, the network slice has the highest priority, and both the RA parameter #1 and the RA parameter #2 are associated with the network slice. In this case, the AS of the terminal device continues to compare priorities of features with a highest priority in the remaining associated features in the RA parameter #1 and the RA parameter #2, that is, priorities of the SDT and the CE. The priority of the CE is higher than that of the SDT. Therefore, in this example, the AS of the terminal device may select the RA parameter #2 associated with the feature CE, and determine the RA parameter #2 as the random access parameter.

Manner 4: Select one group of random access parameters from the plurality of groups of random access parameters in descending order of NSAG priorities.

In other words, the AS of the terminal device selects, from the plurality of groups of random access parameters, one group of random access parameters in descending order of NSAG priorities in the network slice service associated with the current service of the terminal device.

In an implementation (4.1), if the feature attribute corresponding to the current service of the terminal device includes merely a scenario of a network slice, in other words, the current service is associated with merely the feature network slice Slice, the AS of the terminal device may select one group of random access parameters with a highest NSAG priority from a plurality of NSAGs. Alternatively, if an NSAG ID with a highest NSAG priority corresponds to a plurality of groups of random access parameters, a random access parameter associated with a highest NSAG priority in remaining NSAGs except the NSAG is selected, and so on, until one group of random access parameters is selected.

For example, the feature attribute corresponding to the current service of the terminal device includes merely a network slice, and network slice access stratum groups corresponding to the network slice are an NSAG #1, an NSAG #2, and an NSAG #3, where a priority of the NSAG #1 is higher than that of the NSAG #2, and the priority of the NSAG #2 is higher than that of the NSAG #3. An example in which the AS of the terminal device performs the foregoing step 503 is used. In this case, after the AS of the terminal device determines the available random access parameter based on the NSAG #1, the NSAG #2, and the NSAG #3, it may be determined that a correspondence between an available RA parameter and an NSAG is in the following form:
RA parameter #1 <-> (NSAG #1, NSAG #2); and
RA parameter #2 <-> (NSAG #1, NSAG #3).

If the RA parameter is selected in the foregoing manner 4, it can be learned from the NSAG priority that the NSAG #1 has a highest priority, and both the RA parameter #1 and the RA parameter #2 include the NSAG #1. An RA parameter associated with a highest NSAG priority in the remaining NSAGs except the NSAG #1 may continue to be selected. Because the priority of the NSAG #2 is higher than that of the NSAG #3, the AS of the terminal device may select the RA parameter #1.

In an implementation (4.2), if the feature attributes corresponding to the current service of the terminal device further include one or more features of CE, SDT, a RedCap, and the like in addition to the feature network slice, the AS of the terminal device may first select the random access parameter in descending order of feature priorities in the foregoing manner 3. When evaluation is performed to the feature network slice in descending order of feature priorities (for example, a feature priority of the network slice is the highest, or features corresponding to a plurality of available RA parameters all include the network slice and a feature whose priority is higher than that of the feature network slice), the AS of the terminal device may further select the RAparameter with reference to at least one of a quantity of associated NSAGs, a quantity of features, or the NSAG priority, that is, the RA parameter is selected in a manner of combining the manner 3 with at least one of the foregoing manner 1, manner 2, and manner 4.

A specific combination form of the foregoing four RA parameter selection manners is not limited in this embodiment of this application. Any two or more of the manner 1, the manner 2, the manner 3, and the manner 4 may be combined, and different selection results may be obtained based on a selection order of different manners. The following describes several possible combination manners with reference to specific examples.

The manner 3 and the manner 4 are combined. To be specific, selection is performed based on a combination of the associated feature priority and NSAG priority.

The AS of the terminal device first determines a first group of random access parameters in descending order of feature priorities. When determining that the first group of random access parameters is not unique and a feature network slice needs to be evaluated, the AS of the terminal device may select one group of random access parameters from a plurality of first groups of random access parameters in descending order of NSAG priorities.

In other words, the AS of the terminal device preferentially selects, from the plurality of groups of RA parameters, one or more groups of RA parameters with a highest associated feature priority (a first selection). If a selection result is a plurality of groups of RA parameters, an RA parameter with a highest priority in remaining features except the feature may be selected (a second selection), and a third selection, a fourth selection, and the like may be performed in order, to obtain the first group of random access parameters. When only one group of RA parameters is obtained, that is, the first group of random access parameters is unique, the AS of the terminal device may stop selection, and determine that the first group of random access parameters is used for random access.

When the AS of the terminal device performs selection to an i^{th} round in descending order of the feature priorities, and determines a feature network slice that needs to be evaluated, the AS of the terminal device may perform further screening based on the NSAG priority, and select an RA parameter with a highest NSAG priority from the plurality of first groups of random access parameters that are obtained through the previous selection. i is a positive integer, and may be, for example, 1, 2, or 3, and a value of i may be related to a priority order of the feature network slice in features associated with the current service of the terminal device.

For example, the features corresponding to the current service of the terminal device include a network slice (NSAG #1, NSAG #2), SDT, and CE, where a priority of the NSAG #1 is higher than that of the NSAG #2. An example in which the AS of the terminal device performs the foregoing step 503 is used. In this case, after the AS of the terminal device determines the available random access parameter based on the NSAG #1 and the NSAG #2, it may be determined that a correspondence between an available RA parameter and a service feature is in the following form:
RA parameter #1 <-> (NSAG #1), SDT;
RA parameter #2 <-> (NSAG #2), CE; and
RA parameter #3 <-> (NSAG #1), CE, where
priorities of service features in descending order are as follows: CE>network slice>RedCap>SDT.

If selection is performed based on a combination of the manner 3 and the manner 4, the AS of the terminal device may first determine, based on the priorities of service features, that the CE has a highest priority in the features associated with the current service, and both the RA parameter #2 and the RA parameter #3 in the foregoing three groups of RA parameters are associated with the feature CE. Then, the AS continues to determine that the network slice has a highest priority in the remaining features (excluding the CE, that is, the network slice and the SDT) associated with the current service, and both the two groups of RA parameters are associated with the network slice. In this case, the NSAG priority may be combined. Because the priority of the NSAG #1 is higher than that of the NSAG #2, the AS of the terminal device may select the RA parameter #3 as the random access parameter.

The manner 3, the manner 4, and the manner 2 are combined. To be specific, selection is performed based on a combination of the associated feature priority, NSAG priority, and quantity of features.

In an implementation, when the AS of the terminal device selects the RA parameter based on the foregoing manner 3 and manner 4, but still cannot select a unique group of RA parameters, the AS of the terminal device may randomly select one group of RA parameters from the plurality of groups of RA parameters for random access, or may continue to select one group of RA parameters based on a combination with another selection manner.

In other words, the AS of the terminal device preferentially selects, from the plurality of groups of RA parameters, one or more groups of RA parameters with a highest associated feature priority (a first selection). If a selection result is a plurality of groups of RA parameters, an RA parameter with a highest priority in remaining features except the feature may be selected (a second selection), and a third selection, a fourth selection, and the like may be performed in order, to obtain the first group of random access parameters. When only one group of RA parameters is obtained, that is, the first group of random access parameters is unique, the AS of the terminal device may stop selection, and determine that the first group of random access parameters is used for random access.

When the AS of the terminal device performs selection to an i^{th} round in descending order of the feature priorities, and determines a feature network slice that needs to be evaluated, the AS of the terminal device may perform, based on the NSAG priorities, further selection from the plurality of first groups of random access parameters that are obtained through the previous selection. When not one group of RA parameters is obtained in descending order of the NSAG priorities, the AS may perform further screening with reference to the quantity of features, and select an RA parameter with a largest quantity of features from the plurality of RA random access parameters.

For example, the features corresponding to the current service of the terminal device include a network slice (NSAG #1, NSAG #2), SDT, and CE, where a priority of the NSAG #1 is higher than that of the NSAG #2. An example in which the AS of the terminal device performs the foregoing step 503 is used. In this case, after the AS of the terminal device determines the available random access parameter based on the NSAG #1 and the NSAG #2, it may be determined that a correspondence between an available RA parameter and a service feature is in the following form:
RA parameter #1 <-> (NSAG #1), SDT;
RA parameter #2 <-> (NSAG #2), CE; and
RA parameter #3 <-> (NSAG #2), CE, SDT, where
priorities of service features in descending order are as follows: CE>network slice>RedCap>SDT.

If selection is performed based on a combination of the manner 3, the manner 4, and the manner 2, the AS of the terminal device may first determine, based on priorities of service features, that the CE has a highest priority in the features associated with the current service, and both the RA parameter #2 and the RA parameter #3 in the foregoing three groups of RA parameters are associated with the feature CE. Then, the AS continues to select the network slice with a highest priority in the remaining features (excluding the CE, that is, the network slice and the SDT) except the feature, and both the two groups of RA parameters are associated with the network slice. In this case, further selection may be performed with reference to the NSAG priority. Because both the two groups of RA parameters are associated with the NSAG #2, that is, NSAG priorities are the same, further selection may be performed with reference to the quantity of features. A quantity of features associated with the RA parameter #2 is 2, and a quantity of features associated with the RA parameter #3 is 3. The AS of the terminal device may select the RA parameter #3 as the random access parameter.

The manner 3 and the manner 1 are combined. To be specific, selection is performed based on a combination of the associated feature priority and quantity of NSAGs.

Similar to the foregoing selection manner, when the AS of the terminal device performs selection to an i^{th} round in descending order of the feature priorities, and determines a feature network slice that needs to be evaluated, the AS of the terminal device may perform further screening based on the quantity of NSAGs, and select an RA parameter with a largest quantity of NSAGs from the plurality of first groups of random access parameters obtained through the previous selection.

For example, the features corresponding to the current service of the terminal device include a network slice (NSAG #1, NSAG #2), SDT, and CE. An example in which the AS of the terminal device performs the foregoing step 503 is used. In this case, after the AS of the terminal device determines the available random access parameter based on the NSAG #1 and the NSAG #2, it may be determined that a correspondence between an available RA parameter and a service feature is in the following form:
RA parameter #1 <-> (NSAG #1), SDT;
RA parameter #2 <-> (NSAG #1, NSAG #2), CE; and
RA parameter #3 <-> (NSAG #2), CE, SDT, where
priorities of service features in descending order are as follows: CE>network slice>RedCap>SDT.

If selection is performed based on a combination of the manner 3 and the manner 1, the AS of the terminal device may first determine, based on the priorities of service features, that the CE has a highest priority in the features associated with the current service, and both the RA parameter #2 and the RA parameter #3 in the foregoing three groups of RA parameters are associated with the feature CE. Then, the AS continues to select the network slice with a highest priority in the remaining features (excluding the CE, that is, the network slice and the SDT) except the feature, and both the two groups of RA parameters are associated with the network slice. In this case, further selection may be performed with reference to the quantity of NSAGs. A quantity of NSAGs associated with the RA parameter #2 is 2, and a quantity of NSAGs associated with the RA parameter #3 is 1. The AS of the terminal device may select the RA parameter #2 as the random access parameter.

In an implementation, if still not a unique group of random access parameters is obtained through selection based on a combination of the foregoing two manners, the AS of the terminal device may randomly select one group of random access parameters from the plurality of groups of random access parameters for random access, or may perform further selection with reference to the third manner or more manners. For example, a plurality of groups of RA parameters are obtained through selection based on the associated service feature priorities and with reference to the NSAG priority, and then one group of random access parameters may be further determined based on one or two selection manners of the quantity of service features and/or the quantity of NSAGs. For a specific selection manner, refer to the foregoing several manners. Details and examples are not described one by one in this application.

Embodiment 3: NSAG information sent by the NAS of the terminal device to the AS of the terminal device includes an identifier of a network slice corresponding to the current service of the terminal device, a correspondence between a plurality of network slice identifiers and NSAG IDs, and an NSAG priority. In other words, the NAS of the terminal device sends, to the AS of the terminal device, all NSAG information obtained from a core network and the network slice identifier corresponding to the current service.

In this implementation, the AS of the terminal device may first determine, based on the network slice identifier (for example, S-NSSAI(s)) corresponding to the current service and with reference to the NSAG information, one or more NSAG IDs and NSAG priorities of the network slice corresponding to the current service. Then, the AS of the terminal device determines one group of random access parameters based on an NSAG ID corresponding to the current service and one or more of a service feature priority, the NSAG priority, or a quantity of service features.

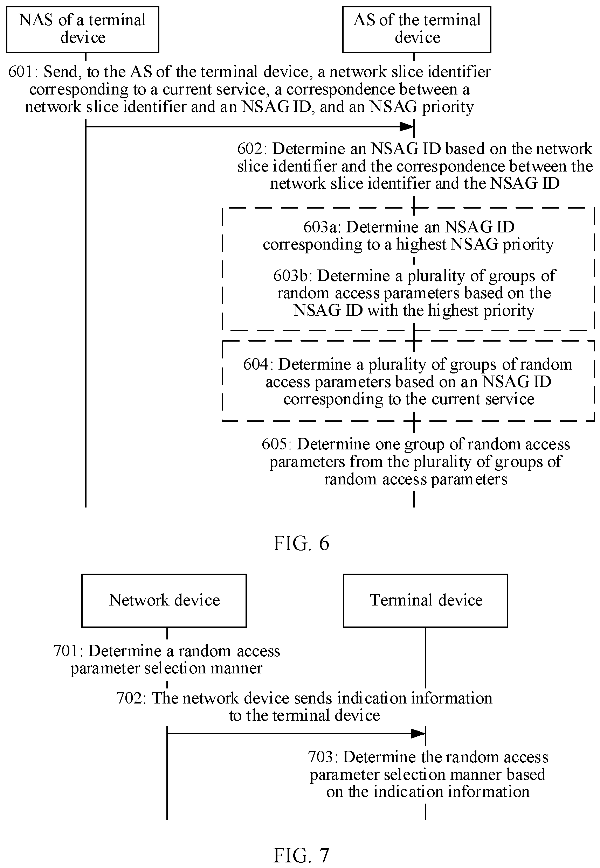

As shown in FIG. 6, the implementation may include the following steps.

601: The NAS of the terminal device sends, to the AS of the terminal device, the network slice identifier corresponding to the current service, a correspondence between a network slice identifier and an NSAG ID, and the NSAG priority.

602: The AS of the terminal device determines the NSAG ID based on the network slice identifier and the correspondence between the network slice identifier and the NSAG ID.

For example, the AS of the terminal device obtains, based on S-NSSAI(s) corresponding to a service that triggers random access and a correspondence that is between an S-NSSAI list and an NSAG ID and that is obtained from the NAS of the terminal device, one or more NSAG IDs corresponding to the S-NSSAI(s) and the NSAG priority.

Then, after determining the NSAG ID and the NSAG priority that correspond to the current service, the AS of the terminal device may perform the following steps 603a and 603b and 605, or perform the following steps 604 and 605.

603a: The AS of the terminal device determines an NSAG ID corresponding to a highest NSAG priority.

The AS of the terminal device may first determine the NSAG ID with the highest priority in the plurality of NSAG IDs based on the plurality of NSAG IDs that are provided by the NAS and that are associated with the service and the NSAG priorities corresponding to the plurality of NSAG IDs.

603b: The AS of the terminal device determines a plurality of groups of random access parameters based on the NSAG ID with the highest priority.

The AS of the terminal device may determine a plurality of groups of available RA parameters based on the NSAG ID with the highest priority and a correspondence between an NSAG ID and an RA parameter and then perform step 605 to select one group from the plurality of groups of RA parameters.

604: The AS of the terminal device determines a plurality of groups of random access parameters based on the NSAG ID corresponding to the current service.

The AS of the terminal device may first determine, based on the plurality of NSAG IDs that are associated with the service and that are provided by the NAS and a correspondence between an NSAG ID and an RA parameter, a plurality of groups of available RA parameters corresponding to the plurality of NSAG IDs, and then perform step 605 to select one group from the plurality of groups of RA parameters.

605: The AS of the terminal device determines one group of random access parameters from the plurality of groups of random access parameters.

In this implementation, after performing the foregoing steps 603a and 603b or performing step 604 based on the broadcast message of the network device, the AS of the terminal device may determine one or more groups of available random access parameters. If the AS of the terminal device may determine one group of available random access parameters after step 603b or 604 is performed, step 605 does not need to be performed, and the AS determines to initiate random access by using the random access parameter. If the AS of the terminal device may determine a plurality of groups of random access parameters after step 603b or 604 is performed, the AS of the terminal device needs to select one group of random access parameters from the plurality of groups of random access parameters. For a specific selection manner, refer to the related descriptions in step 504 in the foregoing Embodiment 2. Details are not described herein again.

The foregoing implementation of this application is applied to random access parameter selection based on a network slice, or may be applied to random access parameter selection based on a feature attribute associated with a service. A specific rule for selecting a parameter by the terminal device is specified, for example, an internal interaction behavior of the terminal device and a specific implementation may be improved through configuration or protocol agreement. Therefore, a probability of a resource conflict between different terminal devices during random access can be reduced, and random access efficiency can be improved. In addition, this embodiment of this application shows a plurality of random access resource selection manners, and the plurality of manners may be combined with each other, so that the random access resource selection manner is flexibly implemented, and can be configured in a customized manner.

In an implementation, the network device may configure a random access parameter selection manner for the terminal device.

Indication information is received from the network device, where the indication information indicates a manner of selecting the random access parameter by the terminal device, or indicates manners of selecting the random access parameter by the terminal device and priorities of the manners.

As shown in FIG. 7, an embodiment of this application further provides a random access parameter selection method. The method may include the following steps.

701: A network device determines a random access parameter selection manner.

702: The network device sends indication information to a terminal device.

In an implementation, the indication information may indicate a manner of selecting a random access parameter by the terminal device.

The indication information may indicate one or more manners of selecting the random access parameter by the terminal device.

The indication information indicates one or more of the following manners:
manner 1: selecting one group of random access parameters associated with a largest quantity of NSAGs from the plurality of groups of random access parameters;
manner 2: selecting one group of random access parameters associated with a largest quantity of service features from the plurality of groups of random access parameters;
manner 3: selecting one group of random access parameters from the plurality of groups of random access parameters in descending order of feature priorities; or
manner 4: selecting one group of random access parameters from the plurality of groups of random access parameters in descending order of NSAG priorities.

Alternatively, in another implementation, the indication information may indicate manners of selecting a random access parameter by the terminal device and priorities of the manners.

When the indication information indicates a plurality of manners of selecting the random access parameter by the terminal device, the indication information may further include a priority order of selections in the plurality of manners.

For example, the indication information sent by the network device indicates the manners of selecting the random access parameter by the terminal device are the manner 3 and the manner 2 in the foregoing embodiment. The indication information further includes that if a priority of the manner 3 is higher than that of the manner 2, it indicates that when selecting the random access parameter, the terminal device may first determine the random access parameter in descending order of feature priorities of the manner 3, and then select, from a plurality of groups of parameters based on a quantity of service features associated with the manner 2, a random access parameter with a largest quantity of service features.

When NSAG information sent by a NAS of the terminal device to an AS includes one NSAG ID or includes only an NSAG ID with a highest priority, the indication information sent by the network device to the terminal device may indicate one or more of the manner 1, the manner 2, or the manner 3. When the NSAG information sent by the NAS of the terminal device to the AS includes a plurality of NSAG IDs, the indication information sent by the network device to the terminal device may indicate one or more of the manner 1, the manner 2, the manner 3, or the manner 4. In other words, the indication information may indicate that the AS of the terminal device may select a corresponding RA parameter based on the NSAG ID and a combination of one or more manners based on an associated feature priority, NSAG priority, or quantity of features. In addition, the indication information may further indicate a manner on which selection is first performed when a plurality of selection manners are combined.

For example, the indication information may indicate to perform selection in descending order of associated feature priorities. If evaluation is performed to a feature network slice, and more than one group of random access parameters are selected, the RA parameter may be first selected based on another feature priority, the RA parameter may be first selected based on a quantity of features, the RA parameter may be selected based on an NSAG priority, or the like.

In an implementation, the network device may pre-configure one of the foregoing selection manners for the terminal device, and then send the indication information to the terminal device, to indicate whether to use the selection manner, that is, a dynamic indication manner in which the indication information is sent in combination with pre-configuration. This may be referred to as a semi-dynamic configuration manner for short in this embodiment of this application.

In another implementation, the network device may pre-configure at least one of the foregoing selection manners for the terminal device, and then send the indication information to the terminal device, to indicate a manner that is enabled or disabled in the pre-configured manners, that is, indicate a selection manner that can be used by the terminal device.

Specifically, the indication information may indicate a random access parameter selection manner by using information such as one bit, an enumerated value, a Boolean value, an index, or a bitmap (bitmap). This is not limited in this embodiment of this application.

703: The terminal device determines the random access parameter selection manner based on the indication information.

In the foregoing possible implementation, the network device dynamically configures or semi-dynamically configures the terminal device, to improve flexibility of the random access parameter selection manner.

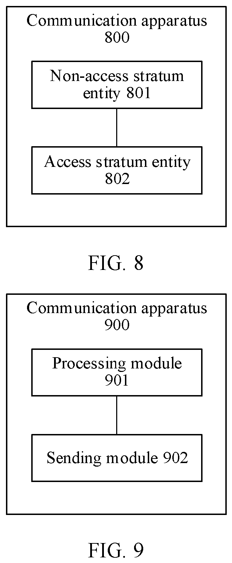

Based on the foregoing implementation, this application further provides a communication apparatus, configured to implement the steps performed by the terminal device in the foregoing random access parameter selection method. As shown in FIG. 8, an apparatus 800 may include a non-access stratum entity 801 and an access stratum entity 802.

The non-access stratum entity 801 is configured to send network slice access stratum group NSAG information to the access stratum entity 802, where the NSAG information includes an NSAG identifier, or the NSAG information includes an NSAG identifier and an NSAG priority.

The access stratum entity 802 is configured to select a random access parameter based on the NSAG information and a service feature priority.

In an implementation, the NSAG identifier is an identifier of an NSAG with a highest priority in NSAGs corresponding to a current service.

In an implementation, the non-access stratum entity 801 is further configured to determine an NSAG identifier with a highest NSAG priority based on a network slice identifier corresponding to the current service and a correspondence between an NSAG identifier and a network slice identifier.

In an implementation, that the access stratum entity 802 is configured to select the random access parameter based on the NSAG information and the service feature priority includes one or more of the following manners:
manner 1: determining a plurality of groups of random access parameters based on the NSAG identifier, and selecting one group of random access parameters associated with a largest quantity of NSAGs from the plurality of groups of random access parameters;
manner 2: determining a plurality of groups of random access parameters based on the NSAG identifier, and selecting one group of random access parameters associated with a largest quantity of service features from the plurality of groups of random access parameters; or
manner 3: determining a plurality of groups of random access parameters based on the NSAG identifier, and selecting one group of random access parameters from the plurality of groups of random access parameters in descending order of feature priorities.

In an implementation, that the NSAG information includes an NSAG identifier and an NSAG priority includes: The NSAG information includes an NSAG identifier and an NSAG priority of the NSAG that correspond to a current service of the apparatus 800.

In an implementation, the NSAG information includes a network slice identifier corresponding to a current service of the apparatus 800, a correspondence between a plurality of network slice identifiers and NSAG identifiers, and NSAG priorities of a plurality of NSAGs.

In an implementation, the access stratum entity 802 is further configured to: determine, based on the NSAG information, an NSAG identifier with a highest NSAG priority in NSAG identifiers corresponding to the current service, determine a plurality of groups of random access parameters based on the NSAG identifier with the highest priority, and select one group of random access parameters from the plurality of groups of random access parameters.

In an implementation, the access stratum entity 802 is further configured to: obtain, based on the NSAG information, the NSAG identifier corresponding to the current service, determine a corresponding plurality of groups of random access parameters based on the NSAG identifier, and select one group of random access parameters from the plurality of groups of random access parameters.

In an implementation, the selecting one group of random access parameters from the plurality of groups of random access parameters specifically includes one or more of the following manners:
manner 1: selecting one group of random access parameters associated with a largest quantity of NSAGs from the plurality of groups of random access parameters;
manner 2: selecting one group of random access parameters associated with a largest quantity of service features from the plurality of groups of random access parameters;
manner 3: selecting one group of random access parameters from the plurality of groups of random access parameters in descending order of feature priorities; or
manner 4: selecting one group of random access parameters from the plurality of groups of random access parameters in descending order of NSAG priorities.

In an implementation, the access stratum entity 802 is further configured to determine a first group of random access parameters, where the first group of random access parameters is determined from the plurality of groups of random access parameters in descending order of associated feature priorities.

In an implementation, if it is determined that the first group of random access parameters is not unique, the access stratum entity 802 is further configured to select one group of random access parameters from a plurality of first groups of random access parameters in descending order of NSAG priorities.

In an implementation, the apparatus 800 is further configured to receive indication information from a network device, where the indication information indicates a manner of selecting the random access parameter by the apparatus 800, or indicates manners of selecting the random access parameter by the apparatus 800 and priorities of the manners.

In an implementation, the random access parameter includes a random access resource. The apparatus 800 is further configured to initiate random access by using the resource.

Specifically, the communication apparatus 800 may implement functions of the terminal device in the foregoing possible implementations. For details, refer to detailed descriptions in the foregoing method examples. Details are not described herein again.

In addition, this application further provides a communication apparatus, configured to implement the steps performed by the network device in the foregoing random access parameter selection method. As shown in FIG. 9, an apparatus 900 may include a processing module 901 and a transceiver module 902.

The processing module 901 is configured to determine a random access parameter selection manner.

The sending module 902 is configured to send indication information to a terminal device, where the indication information indicates a manner of selecting a random access parameter by the terminal device, or indicates manners of selecting a random access parameter by the terminal device and priorities of the manners.

In an implementation, the indication information indicates one or more of the following manners:
manner 1: selecting one group of random access parameters associated with a largest quantity of NSAGs from a plurality of groups of random access parameters;
manner 2: selecting one group of random access parameters associated with a largest quantity of service features from a plurality of groups of random access parameters;
manner 3: selecting one group of random access parameters from a plurality of groups of random access parameters in descending order of feature priorities; or
manner 4: selecting one group of random access parameters from a plurality of groups of random access parameters in descending order of NSAG priorities.

Specifically, the communication apparatus 900 may implement functions of the network device in the foregoing possible implementations. For details, refer to detailed descriptions in the foregoing method examples. Details are not described herein again.

It may be understood that, with reference to FIG. 2, when the communication apparatus is an electronic device, the communication apparatus 800 or the communication apparatus 900 may include a transceiver, for example, include an antenna and a radio frequency circuit. The communication apparatus 800 or the communication apparatus 900 may further include a processor, for example, a baseband chip.

It should be noted that, for a specific execution process and an embodiment of the foregoing apparatus, refer to the steps performed by the terminal device or the network device and the related descriptions in the foregoing method embodiments. For a resolved technical problem and a technical effect brought by resolving the technical problem, refer to the content described in the foregoing embodiments. Details are not described one by one herein again.

In this embodiment, the apparatus is presented in a form of functional modules obtained through division in an integrated manner. The "module" herein may be a specific circuit, a processor for executing one or more software or firmware programs, a memory, an integrated logic circuit, and/or another component that may provide the foregoing functions. In a simple embodiment, a person skilled in the art may figure out that the sidelink transmission apparatus may be in a form shown in FIG. 2.

For example, functions/implementation processes of the processing module 901 in FIG. 9 may be implemented by the processor 201 in FIG. 2 by invoking the computer program instructions stored in the memory 204. For example, functions/implementation processes of the sending module 902 in FIG. 9 may be implemented by the communication interface 203 in FIG. 2.

In some implementations, the processor 201 in FIG. 2 may invoke the computer-executable instructions stored in the memory 204, so that the apparatus 200 can perform the operations performed by the terminal device or the network device in the foregoing method embodiments, to implement the foregoing possible implementation methods in this application.

The communication apparatus in the foregoing apparatus embodiments may exactly correspond to the communication device or the network device in the method embodiments, and a corresponding module or unit performs a corresponding step. For example, when the apparatus is implemented in a form of a chip, the processing module 901 may be an interface circuit that is of the chip and that is configured to receive a signal from another chip or apparatus. The foregoing sending module 902 configured to send a signal is an interface circuit of the apparatus, and is configured to send a signal to another apparatus. For example, when the apparatus is implemented by using a chip, the sending module 902 may be an interface circuit configured to send a signal to another chip or apparatus.

In an example embodiment, a computer-readable storage medium including instructions or a computer program product is further provided. The instructions may be executed by the processor 201 of the communication apparatus 200 to complete the method in the foregoing embodiment. Therefore, for technical effects that can be achieved by this embodiment, refer to the foregoing method embodiments. Details are not described herein again.

This application further provides a computer program product. The computer program product includes instructions. When the instructions are executed, a computer is enabled to separately perform operations corresponding to the terminal device or the network device in the foregoing methods.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a communication apparatus to which the chip is applied performs the operations of the terminal device and the network device in the foregoing methods provided in embodiments of this application.

Optionally, any communication apparatus provided in embodiments of this application may include the system chip.

Optionally, the computer instructions are stored in a storage unit.

An embodiment of this application further provides a communication system. The communication system may include the terminal device and the network device in any one of the foregoing implementations. Alternatively, the communication system may include the communication apparatus 800 shown in FIG. 8 and the communication apparatus 900 shown in FIG. 9 in the foregoing implementations.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

It may be understood that a same step or steps or messages with a same function in embodiments of this application may be referenced in different embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A random access parameter selection method, wherein the method comprises:
sending, by a non-access stratum of a terminal device, network slice access stratum group NSAG information to an access stratum of the terminal device, wherein the NSAG information comprises an NSAG identifier, or the NSAG information comprises an NSAG identifier and an NSAG priority; and
selecting, by the access stratum of the terminal device, a random access parameter based on the NSAG information and a service feature priority.

2. The method according to claim 1, wherein the NSAG identifier is an identifier of an NSAG with a highest priority in NSAGs corresponding to a current service.

3. The method according to claim 2, wherein the method further comprises:
determining, by the non-access stratum of the terminal device, an NSAG identifier with a highest NSAG priority based on a network slice identifier corresponding to the current service and a correspondence between an NSAG identifier and a network slice identifier.

4. The method according to claim 2 or 3, wherein the selecting, by the access stratum of the terminal device, a random access parameter based on the NSAG information and a service feature priority comprises one or more of the following manners:
manner 1: determining a plurality of groups of random access parameters based on the NSAG identifier, and selecting one group of random access parameters associated with a largest quantity of NSAGs from the plurality of groups of random access parameters;
manner 2: determining a plurality of groups of random access parameters based on the NSAG identifier, and selecting one group of random access parameters associated with a largest quantity of service features from the plurality of groups of random access parameters; or
manner 3: determining a plurality of groups of random access parameters based on the NSAG identifier, and selecting one group of random access parameters from the plurality of groups of random access parameters in descending order of feature priorities.

5. The method according to claim 1, wherein that the NSAG information comprises an NSAG identifier and an NSAG priority comprises:
the NSAG information comprises an NSAG identifier and an NSAG priority of the NSAG that correspond to a current service of the terminal device.

6. The method according to claim 1, wherein the NSAG information comprises a network slice identifier corresponding to a current service of the terminal device, a correspondence between a network slice identifier and an NSAG identifier, and the NSAG priority of the NSAG.

7. The method according to claim 5 or 6, wherein the selecting, by the access stratum of the terminal device, a random access parameter based on the NSAG information and a service feature priority comprises:
determining, by the access stratum of the terminal device based on the NSAG information, an NSAG identifier with a highest NSAG priority in NSAG identifiers corresponding to the current service; and
determining a plurality of groups of random access parameters based on the NSAG identifier with the highest priority, and selecting one group of random access parameters from the plurality of groups of random access parameters.

8. The method according to claim 5 or 6, wherein the selecting, by the access stratum of the terminal device, a random access parameter based on the NSAG information and a service feature priority comprises:
obtaining, by the access stratum of the terminal device based on the NSAG information, the NSAG identifier corresponding to the current service, determining a corresponding plurality of groups of random access parameters based on the NSAG identifier, and selecting one group of random access parameters from the plurality of groups of random access parameters.

9. The method according to claim 7 or 8, wherein the selecting one group of random access parameters from the plurality of groups of random access parameters specifically comprises one or more of the following manners:
manner 1: selecting one group of random access parameters associated with a largest quantity of NSAGs from the plurality of groups of random access parameters;
manner 2: selecting one group of random access parameters associated with a largest quantity of service features from the plurality of groups of random access parameters;
manner 3: selecting one group of random access parameters from the plurality of groups of random access parameters in descending order of feature priorities; or
manner 4: selecting one group of random access parameters from the plurality of groups of random access parameters in descending order of NSAG priorities.

10. The method according to claim 9, wherein selecting, by the access stratum of the terminal device, one group of random access parameters from the plurality of groups of random access parameters comprises:
determining, by the access stratum of the terminal device, a first group of random access parameters, wherein the first group of random access parameters is determined from the plurality of groups of random access parameters in descending order of associated feature priorities.

11. The method according to claim 10, wherein if it is determined that the first group of random access parameters is not unique, selecting, by the access stratum of the terminal device, one group of random access parameters from the plurality of groups of random access parameters comprises:
selecting one group of random access parameters from a plurality of first groups of random access parameters in descending order of NSAG priorities.

12. The method according to any one of claims 4 and 9 to 11, wherein the method further comprises:
receiving indication information from a network device, wherein the indication information indicates a manner of selecting the random access parameter by the terminal device, or indicates manners of selecting the random access parameter by the terminal device and priorities of the manners.

13. The method according to any one of claims 1 to 12, wherein the random access parameter comprises a random access resource; and
the method further comprises: initiating, by the terminal device, random access by using the resource.

14. A random access parameter selection method, wherein the method comprises:
determining, by a network device, a random access parameter selection manner; and
sending, by the network device, indication information to a terminal device, wherein the indication information indicates a manner of selecting a random access parameter by the terminal device, or indicates manners of selecting a random access parameter by the terminal device and priorities of the manners.

15. The method according to claim 14, wherein the indication information indicates one or more of the following manners:
manner 1: selecting one group of random access parameters associated with a largest quantity of NSAGs from a plurality of groups of random access parameters;
manner 2: selecting one group of random access parameters associated with a largest quantity of service features from a plurality of groups of random access parameters;
manner 3: selecting one group of random access parameters from a plurality of groups of random access parameters in descending order of feature priorities; or
manner 4: selecting one group of random access parameters from a plurality of groups of random access parameters in descending order of NSAG priorities.

16. A communication apparatus, wherein the apparatus comprises a non-access stratum entity and an access stratum entity;
the non-access stratum entity is configured to send network slice access stratum group NSAG information to the access stratum entity, wherein the NSAG information comprises an NSAG identifier, or the NSAG information comprises an NSAG identifier and an NSAG priority; and
the access stratum entity is configured to select a random access parameter based on the NSAG information and a service feature priority.

17. The apparatus according to claim 16, wherein the NSAG identifier is an identifier of an NSAG with a highest priority in NSAGs corresponding to a current service.

18. The apparatus according to claim 17, wherein the non-access stratum entity is further configured to determine an NSAG identifier with a highest NSAG priority based on a network slice identifier corresponding to the current service and a correspondence between an NSAG identifier and a network slice identifier.

19. The apparatus according to claim 18, wherein that the access stratum entity selects the random access parameter based on the NSAG information and the service feature priority comprises one or more of the following manners:
manner 1: determining a plurality of groups of random access parameters based on the NSAG identifier, and selecting one group of random access parameters associated with a largest quantity of NSAGs from the plurality of groups of random access parameters;
manner 2: determining a plurality of groups of random access parameters based on the NSAG identifier, and selecting one group of random access parameters associated with a largest quantity of service features from the plurality of groups of random access parameters; or
manner 3: determining a plurality of groups of random access parameters based on the NSAG identifier, and selecting one group of random access parameters from the plurality of groups of random access parameters in descending order of feature priorities.

20. The apparatus according to claim 16, wherein that the NSAG information comprises an NSAG identifier and an NSAG priority comprises:
the NSAG information comprises an NSAG identifier and an NSAG priority of the NSAG that correspond to a current service of the apparatus.

21. The apparatus according to claim 16, wherein the NSAG information comprises a network slice identifier corresponding to a current service of the apparatus, a correspondence between a network slice identifier and an NSAG identifier, and the NSAG priority of the NSAG.

22. The apparatus according to claim 20 or 21, wherein the access stratum entity is further configured to: determine, based on the NSAG information, an NSAG identifier with a highest NSAG priority in NSAG identifiers corresponding to the current service, determine a plurality of groups of random access parameters based on the NSAG identifier with the highest priority, and select one group of random access parameters from the plurality of groups of random access parameters.

23. The apparatus according to claim 20 or 21, wherein the access stratum entity is further configured to: obtain, based on the NSAG information, the NSAG identifier corresponding to the current service, determine a corresponding plurality of groups of random access parameters based on the NSAG identifier, and select one group of random access parameters from the plurality of groups of random access parameters.

24. The apparatus according to claim 22 or 23, wherein the selecting one group of random access parameters from the plurality of groups of random access parameters specifically comprises one or more of the following manners:
manner 1: selecting one group of random access parameters associated with a largest quantity of NSAGs from the plurality of groups of random access parameters;
manner 2: selecting one group of random access parameters associated with a largest quantity of service features from the plurality of groups of random access parameters;
manner 3: selecting one group of random access parameters from the plurality of groups of random access parameters in descending order of feature priorities; or
manner 4: selecting one group of random access parameters from the plurality of groups of random access parameters in descending order of NSAG priorities.

25. The apparatus according to claim 24, wherein the access stratum entity is further configured to determine a first group of random access parameters, wherein the first group of random access parameters is determined from the plurality of groups of random access parameters in descending order of associated feature priorities.

26. The apparatus according to claim 25, wherein if it is determined that the first group of random access parameters is not unique, that the access stratum entity selects one group of random access parameters from the plurality of groups of random access parameters comprises: selecting one group of random access parameters from a plurality of first groups of random access parameters in descending order of NSAG priorities.

27. The apparatus according to any one of claims 19 and 24 to 26, wherein the apparatus is further configured to receive indication information from a network device, wherein the indication information indicates a manner of selecting the random access parameter by the apparatus, or indicates manners of selecting the random access parameter by the apparatus and priorities of the manners.

28. The apparatus according to any one of claims 16 to 27, wherein the random access parameter comprises a random access resource; and
the apparatus is further configured to initiate random access by using the resource.

29. A communication apparatus, wherein the apparatus comprises:
a processing module, configured to determine a random access parameter selection manner; and
a sending module, configured to send indication information to a terminal device, wherein the indication information indicates a manner of selecting a random access parameter by the terminal device, or indicates manners of selecting a random access parameter by the terminal device and priorities of the manners.

30. The apparatus according to claim 29, wherein the indication information indicates one or more of the following manners:
manner 1: selecting one group of random access parameters associated with a largest quantity of NSAGs from a plurality of groups of random access parameters;
manner 2: selecting one group of random access parameters associated with a largest quantity of service features from a plurality of groups of random access parameters;
manner 3: selecting one group of random access parameters from a plurality of groups of random access parameters in descending order of feature priorities; or
manner 4: selecting one group of random access parameters from a plurality of groups of random access parameters in descending order of NSAG priorities.

31. A terminal device, wherein the communication device comprises a processor and a memory coupled to the processor, the memory stores computer program code, the computer program code comprises computer instructions, and when the processor executes the computer instructions, the terminal device is enabled to perform the method according to any one of claims 1 to 13.

32. A network device, wherein the network device comprises a processor and a memory coupled to the processor, the memory is coupled to the processor, the memory stores computer program code, the computer program code comprises computer instructions, and when the processor executes the computer instructions, the network device is enabled to perform the method according to either of claims 14 and 15.

33. A computer-readable storage medium, wherein the computer-readable storage medium stores computer-executable instructions, and when the computer-executable instructions are invoked by the computer, the computer is enabled to perform the method according to any one of claims 1 to 13, or perform the method according to either of claims 14 and 15.

34. A computer program product comprising instructions, wherein when the computer program product runs on a computer, the computer is enabled to perform the method according to any one of claims 1 to 13, or perform the method according to either of claims 14 and 15.

35. A chip, wherein the chip is coupled to a memory, and is configured to: read and execute program instructions stored in the memory, to implement the method according to any one of claims 1 to 13, or implement the method according to either of claims 14 and 15.

36. A communication system, wherein the communication system comprises the communication apparatus according to any one of claims 16 to 28 and the communication apparatus according to either of claims 29 and 30.
